# EUROPEAN PATENT APPLICATION

(11) **EP 3 029 209 A2**
(43) Date of publication of application: **08.06.2016**
(21) Application number: 15182721.9
(22) Date of filing: 27.08.2015
(51) Int. Cl.: E03C 1/06

(54) **SHOWER INSTALLATION WITH ELECTRONICAL CONTROL SYSTEM**

(30) Priority: 27.08.2014 GB 201415153
(71) Applicant: DLP Limited, Douglas, Isle of Man IM2 4RW (GB)
(72) Inventor: Doyle, Thomas Michael, IM4 2JG Braddan (IM); Felmeri, Ian Douglas, IM9 1BD Castletown (IM); Finch, Robert Mark, IM9 6AX Port Erin (IM); Self, James Edward, IM9 4AX Colby (IM); Wang, Yanchun, IM9 3EA Ballasalla (IM)
(74) Representative: Hocking, Adrian Niall

(57) **Abstract**

An improved adaptable shower apparatus (10) in particular for use by a user having a visual impairment, including a control unit (12) having a means of reactively adapting to real-time circumstantial changes. The shower apparatus (10) may include an anti-glare surface finish, and may include a remote control unit (42) adapted for use by a person with limited dexterity, in addition to the provision of a cradle (92) for the remote control unit (42). A shower head device (16) having an improved flow control mechanism (68) and an improved soap tray (24) to prevent unexpected soap ejection or loss is also provided. The control unit (12) also has a rear mounted water outlet (20), relief vent (147) and relief chamber (150) to reduce the dangers from pressure build-up. A system for validating usage of the shower apparatus (10) is also provided.

## Description

The present invention relates to a, preferably adaptable, shower system, in particular for use by individuals who are less able-bodied, and especially for those with visual impairments. The invention relates primarily to a remote controllable shower apparatus, having a plurality of accessibility improvements to improve ease of use whilst mitigating risk to the user. The invention also relates to a shower-use restriction system and a method of sanctioning use of a shower apparatus utilising said system.

The routine tasks of daily life can often be substantially complicated by any form of disability. Visual impairment is one such disability which can greatly affect one's ability to perform operations which would otherwise be taken for granted.

The bathroom is one area which can prove hazardous to those less able-bodied. Traditionally, electric shower water heater units for domestic showering have been developed for operation by the able-bodied individual, typically for use when standing. This has meant that for disabled or infirm users who need to be seated when showering, the controls and adjustable features of the unit are often difficult to access or manipulate. Furthermore, many surfaces in such rooms are both hard and slippery, which can result in self-sanitation being a challenging task.

In particular, the shower is dangerous, since, upon entering a shower cubicle or bathtub having an associated shower, the user will be in the one place where they will be positioned on a porcelain, plastics or similar surface that simultaneously has water flow over its surface. It is also difficult for a physically disabled individual to avoid scalding bursts of water from a shower, if the control mechanism of the shower is located directly underneath the shower head.

There are numerous additional challenges associated with showering. The glossy surfaces of plastics or porcelain surfaces can be challenging for those with visual impairments to see details of, for example. Soap dishes are also common hazards, since soap contained therein can be readily ejected and lost, which may create a further danger of slipping in the shower.

It is an object of the present invention to provide improvements in and relating to shower apparatuses so as to improve their accessibility to those having physical or mental disabilities, in particular to those having visual impairments, since a person having such a disability is presently expected to utilise equipment and resources which are either not adapted or are poorly adapted from those used by the able-bodied.

According to a first aspect of the invention there is provided a shower system comprising: a shower apparatus; a processor; a controller; and at least one data input means for receiving real-time contextual data relevant to a shower experience; wherein the contextual data is provided to the in use processor which sends a signal to the controller to control a real-time output of the shower apparatus.

Preferable and/or optional features of the first aspect of the invention are set forth in claims 2 to 14.

A shower system has the advantage of being able to monitor data external to the shower apparatus in order to effect real-time changes to a shower experience. In practice, this may manifest as the monitoring of biometry of a user to enable a carer to monitor the status of a vulnerable user. However, the system may be capable of determining myriad details which may make a shower experience more comfortable for the user, or may monitor other features which the user may consider to be relevant, for example, water wastage during a shower experience, or the temperature of the water.

According to a second aspect of the invention, there is provided a shower apparatus adapted for use by a user having a visual impairment, the shower apparatus comprising: a housing including at least a water inlet, a water outlet, and a control unit having at least a flow control mechanism for controlling at least water flow from the water inlet to the water outlet; a shower head; and a liquid conduit connecting the shower head to the water outlet; wherein at least a portion of a user-facing external surface of the shower apparatus includes an anti-glare surface finish to thereby substantially reduce or prevent glare from reflected light from the said external surface.

Preferable and/or optional features of the second aspect of the invention are set forth in claims 17 to 20.

Persons having a visual impairment can often find that the reflected light from glossy plastics, ceramics or metals can make it difficult to differentiate between distinct components, especially in the bathroom, where many items are formed from porcelain or white plastics. By providing a dull or lustreless finish to the shower apparatus, the effects of glare can be substantially obviated, making identification of the relevant components more straightforward.

According to a third aspect of the invention, there is provided a shower-apparatus remote control unit comprising: a water-resistant casing; a control circuit; at least one user input to allow the user to input commands to the control circuit to control a function of an associated remote-controllable shower apparatus; and communications means for transmitting commands provided by the user to the shower apparatus; the control circuit including control logic requiring a multi-step input process via the user input in order to initiate an output of a corresponding command signal to the shower apparatus.

Preferable and/or optional features of the third aspect of the invention are set forth in claims 23 to 29.

According to a fourth aspect of the invention, there is provided a method of controlling a shower apparatus, the method comprising a multi-step input process by a user to an electronic controller interface of the shower apparatus in order to enable a control command to be outputted by an electronic control circuit of the shower apparatus. Said multi-step input process may, for example, include a first step of application of pressure for a period which is within a predetermined range to the electronic controller interface, followed by the step of release of said pressure.

It is a common problem for remote control units to be left in an active state, perhaps inside a user's pocket. This can result in accidental activation without the user's knowledge. For a shower apparatus, it is clear that this would result in water wastage on a large scale, and potentially a hazard to a user in the shower. For a person having limited dexterity, it can be difficult to input the correct commands to a remote control unit successfully, which could result in scalding in a shower situation. It is therefore advantageous to provide a simple, multi-step input process which can thereby ensure that the commands transmitted to the controller of a shower apparatus are the correct commands, rather than accidental commands.

According to a fifth aspect of the invention there is provided a shower-apparatus remote control unit comprising: a water-resistant casing; an electronic control circuit including at least a timing circuit, an energy-conservation circuit, and a status determination circuit; at least one user input to allow the user to input commands to control a function of the shower apparatus; communications means for communicating with the shower apparatus; an energy storage device housed within the casing; and indicator means for indicating an activation status of the remote control unit; wherein the energy conservation circuit periodically deactivates the remote control unit when not in use, and the timing circuit use-independently periodically reactivates the remote control unit enabling the status determination circuit to determine an activation status of the remote control unit, the activation status being outputtable by the indicator means, so that a user can pre-determine an activity level of the remote control unit before utilising an associated shower apparatus.

Preferable and/or optional features of the fifth aspect of the invention are set forth in claims 34 to 40.

If left in an active state, a remote control unit can rapidly drain its battery, which, if unnoticed, will result in the user being unable to operate the shower apparatus using the remote control unit. It is therefore beneficial to provide some means of indicating to a user that the remote control unit is running low on battery power, unable to communicate with the shower controller, or any other reason for which the remote control unit may otherwise be inoperative, so as to prevent time wastage whilst the user rectifies the problem when they would otherwise have intended to use the shower.

According to a sixth aspect of the invention there is provided a remote-control cradle for a shower-apparatus remote control unit, the cradle comprising: a remote control unit receptacle; and mounting means for mounting the cradle to a surface, the mounting means including a permanent mounting fastener, a temporary mounting fastener, and a mounting fastener engagement portion on the receptacle which is selectably engagable with the permanent mounting fastener and the temporary mounting fastener.

Preferable and/or optional features of the sixth aspect of the invention are set forth in claims 43 to 48.

Given that the shower-apparatus remote control unit can be readily misplaced or lost, it is highly advantageous to provide a storage means for it. By providing a cradle having multiple means of mounting, the cradle can be adapted for use with users having a wide variety of needs within a single shower apparatus.

According to a seventh aspect of the invention there is provided a shower head device for a shower apparatus, the shower head comprising: a hollow body defining a water inlet and a water outlet, shower water being flowable therebetween; a water-discharge head in liquid communication with the water outlet of the hollow body and including a plurality of apertures in a surface thereof to enable the discharge of water; and a rotationally actuatable flow control mechanism capable of selectably altering a flow rate through the plurality of apertures; the flow control mechanism including a plurality of ergonomically different interchangeable user interfaces which can be selectably mounted and demounted based on a user requirement.

Preferable and/or optional features of the seventh aspect of the invention are set forth in claims 51 to 56.

Alteration of the flow control mechanism of a shower head can be difficult for an individual having limited dexterity, and therefore it is highly advantageous to provide a simple means of easily controlling the flow control mechanism.

According to an eighth aspect of the invention there is provided a riser-mountable soap tray for use with a shower apparatus, the soap tray comprising: a main body including a soap-receiving portion which has an upper surface having a recess formed therein for receiving a bar of soap, and a connector for connecting the tray to a riser rail of the shower apparatus; and a cover element shaped so as to at least in part overlap and engage with the main body, the mounted cover element defining a supplementary perimeter wall around the recess of the main body to more positively receive and house the bar of soap when placed therein.

Preferable and/or optional features of the eighth aspect of the invention are set forth in claims 59 to 64.

Soap is liable to be ejected from a soap tray as the user fumbles for a bar of soap in the slippery bathroom environment. This represents a trip hazard for any shower user, but particularly for users having visual impairments, since they will struggle to detect the rogue bar of soap on the floor of the bath or shower cubicle. As such, it is beneficial to provide a soap tray which substantially limits the probability of soap ejection from the tray.

According to a ninth aspect of the invention there is provided a shower-water controller for a shower apparatus, the controller comprising: a water-resistant casing including a relief chamber; a water inlet; a water outlet; a relief vent in fluid communication with the water outlet; and a control unit housed within the casing and having at least a flow control mechanism for controlling at least water flow from the water inlet to the water outlet; the relief vent being at or adjacent to a rear surface of the casing and being in fluid communication with the relief chamber, so as to prevent or inhibit water discharge into the casing and/or towards a user in the event of a failure at or adjacent to the water outlet.

Preferable and/or optional features of the ninth aspect of the invention are set forth in claims 67 to 73.

According to a tenth aspect of the invention there is provided method of preventing water ingress into a shower-water controller, the method comprising the steps of: a] locating a relief vent in fluid communication with a water outlet of the shower-water controller at the rear of the shower-water controller; b] providing a pressure relief valve at or adjacent the relief vent, and a relief chamber external to a housing of the shower-water controller; and c] discharging excess water from the water outlet via the relief chamber using the pressure relief valve in the event of a build-up of water pressure, such that the excess water does not flow into the housing or onto a user of an associated shower apparatus.

Water outlets mounted on the lower edge of the controller housing are liable to vent hot water onto a user in the event of a pressure build-up, and therefore it is advantageous to provide a rear mounted water outlet and associated relief vent to the housing. However, there must beneficially be provided a relief chamber to prevent ingress of water into the housing and therefore into the electronic components of the device.

According to an eleventh aspect of the invention there is provided a shower-use restriction system comprising: a shower apparatus; a controller in communication with and capable of controlling an activation status of the shower apparatus; and a remote external device communicable with the controller, the remote external device including a digital validation key which, upon communication to the controller, enables activation of the shower apparatus by the controller.

Preferable and/or optional features of the tenth aspect of the invention are set forth in claims 77 to 83.

According to a twelfth aspect of the invention there is provided a method of validating sanctioned use of a shower apparatus, preferably using a system according to the eleventh aspect of the invention, the method comprising the steps of: a] receiving a digital validation key onto the remote external device from a third-party source; b] the remote external device communicating the digital validation key to the controller; c] the controller determining a validity of the digital validation key; and d] if the digital validation key is valid, the controller permitting activation of the shower apparatus by the user, otherwise the controller denying activation of the shower apparatus by the user.

It may be advantageous for a carer to restrict access to a shower apparatus for a user having a disability so as to prevent the user causing injury to themselves. However, the validation of activation of a shower apparatus has a wider ranging application to any type of communally available shower unit, to prevent unauthorised usage.

The invention will now be more particularly described, by way of example only, with reference to the accompanying drawings, in which:
Figure 1 shows a perspective representation of one embodiment of a shower apparatus suitable for use in each of the first to twelfth aspects of the invention;
Figure 2 shows a diagrammatic representation of an adaptive shower system in accordance with the first aspect of the invention;
Figure 3 shows a perspective representation of a first embodiment of a remote control unit for a shower apparatus according to the second, third and fifth aspects of the invention;
Figure 4 shows a diagrammatic representation of a method of using a remote control unit for a shower apparatus in accordance with the fourth aspect of the invention;
Figure 5 shows a diagrammatic representation of a second embodiment of a remote control unit for a shower apparatus according to the fifth aspect of the invention;
Figure 6a shows a front perspective representation of one embodiment of a cradle for a remote control unit mounted using its permanent mounting fastener in accordance with the sixth aspect of the invention;
Figure 6b shows a rear perspective representation of the cradle of Figure 6a, mounted using its temporary mounting fastener;
Figure 7a shows a front perspective representation of a first embodiment of a shower head device in accordance with the seventh aspect of the invention;
Figure 7b shows an exploded perspective representation of the shower head device of Figure 7a;
Figure 7c shows a front perspective representation of a second embodiment of a shower head device in accordance with the seventh aspect of the invention;
Figure 8a shows a front perspective representation of a first embodiment of a soap tray in accordance with the eighth aspect of the invention, the cover element being shown in engagement with the main body of the soap tray;
Figure 8b shows the soap tray of Figure 8a with the cover element disengaged from the main body;
Figure 8c shows a front perspective representation of the main body of a second embodiment of soap tray according to the eighth aspect of the invention;
Figure 9a shows a partial exploded representation of one embodiment of the housing of a control unit for a shower apparatus in accordance with the ninth aspect of the invention, showing the inside of the housing;
Figure 9b shows the rear of the housing shown in Figure 9a;
Figure 10 shows a perspective representation of a shower-use restriction system in accordance with the eleventh aspect of the invention; and
Figure 11 shows a diagrammatic representation of a method of validating sanctioned use of a shower apparatus in accordance with the twelfth aspect of the invention.

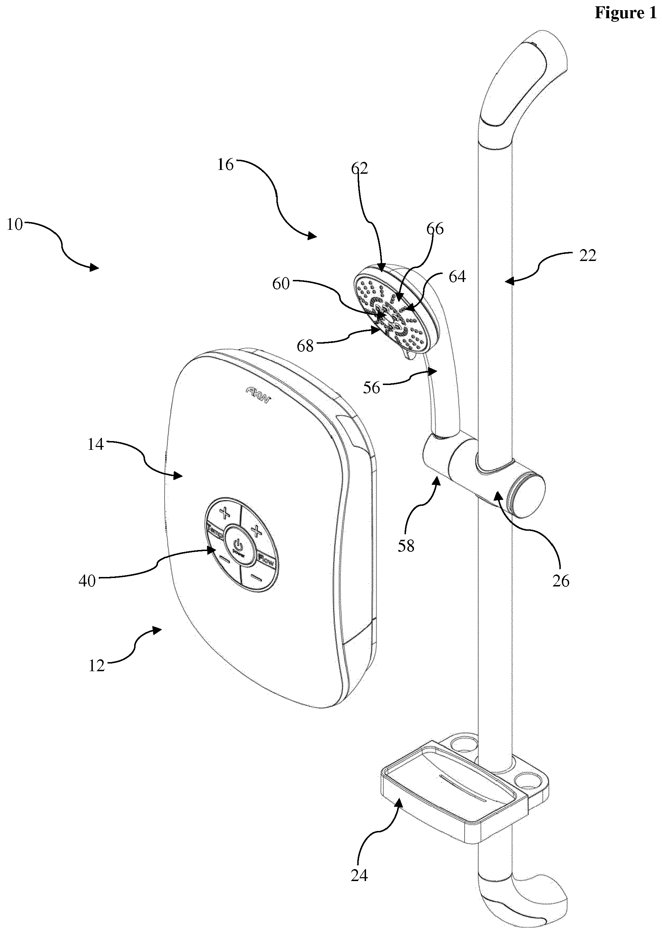

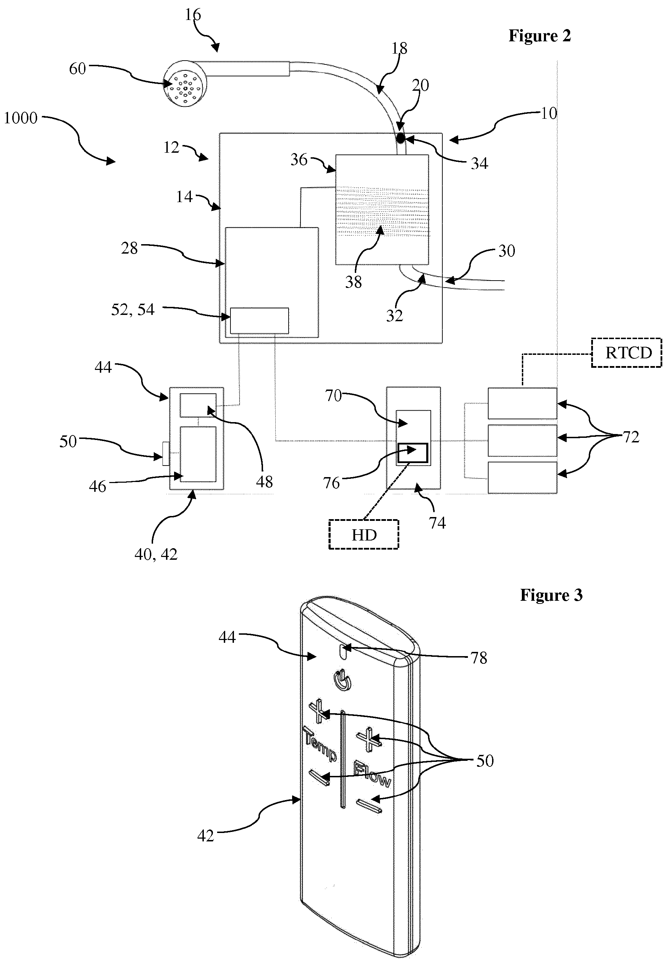

Referring firstly to Figures 1 and 2 of the drawings, there is shown a shower apparatus, indicated globally at 10, which is adapted for ease of use by a person having a disability, and in particular for a person having a visual impairment.

The shower apparatus 10 comprises a control unit 12 having a water-resistant housing 14, a shower head 16, and a liquid conduit 18 connecting the shower head to a water outlet 20 of the housing 14. The apparatus 10 further comprises a riser rail 22 to which is mounted a soap tray 24 and a riser 26, the riser 26 being able to accept and hold the shower head 16.

The control unit 12 is capable of controlling at least an activation condition of the shower apparatus 10, and preferably also water flow rate and temperature. To this end, the control unit 12 comprises a controller 28 housed within the water-resistant housing 14, which is able to control the status of the water running through the shower apparatus 10.

The water enters the control unit 12 via a water inlet 30 into the housing 14, passes through internal pipework 32 to arrive at the water outlet 20, which can transport the water to the shower head 16 via the liquid conduit 18. At the water outlet 20 there is a pressure relief valve 34 to prevent build-up of pressure within the control unit 12, typically formed as a small water-resistant ball in the piping of the water outlet 20. The pipework 32 includes a heating tank 36 within which water arriving from the water inlet 30 can be heated to a desired temperature by a heating element 38 before being output.

The heating of water to temperature by a heating element is well known, and is the standard for current electric shower apparatuses. However, by way of clarification, the present invention could equally be applied to a mixer shower, wherein two streams of water of different temperatures are mixed, in which case the control unit would require an additional water inlet.

For the controller 28 to effect changes to the water flow and temperature, there is further provided a user control means 40, which, in the embodiment shown in Figure 2, is a remote control unit 42. However, the user control means 40 could additionally or alternatively be formed with the control unit 12, as shown in Figure 1. This remote control unit 42 is formed having a water-resistant and water-tight casing 44 which encapsulates at least a control circuit 46 and a remote communications means 48 for communicating with the control unit 12, and at least one user input 50 to allow the user to supply commands to the shower apparatus 10 via the remote control unit 42.

The control unit 12 therefore also includes a communications means 52 for communicating with the remote control unit 42, which in this embodiment is a wireless receiver 54 capable of at least receiving commands from the remote control unit 42. The communications means 52 may further be capable of transmitting signals in addition to receiving them, and may be formed as a transceiver instead. However, it will be appreciated that the remote control unit could be tethered to the control unit, and therefore be in wired communication, or the user control means could be as simple as a rotatable dial attached to the housing of the control unit.

The shower head 16 is a device having a hollow body 56, typically formed from moulded plastics material, which defines a water inlet 58 and a water outlet 60, with shower water flowable therebetween. At the water outlet 60 is located a water-discharge head 62 which includes a plurality of apertures 64 through an outer surface 66 of the water-discharge head 62, from which the shower water may flow. There is also provided a rotationally actuatable flow control mechanism 68 engaged about a perimeter of the water-discharge head 62, which is capable of altering the flow of water through the apertures 64.

The shower head 16 is connected at its water inlet 58 to the liquid conduit 18, which is formed as a flexible hose, which in turn connects to the water outlet 20 of the control unit 12.

The control unit 12 and riser rail 22 are both connected to a mounting surface, typically a bathroom wall or wall of a shower cubicle, and, when not in use, the shower head 16 is connected to the riser rail 22 via the riser 26. The height and orientation of the riser 26 is manually adjustable so as to alter the position of water emergent from the water-discharge head 62. It is possible to reinforce the riser rail 22 so as to be able to act as a support which can be grasped by the user; typical riser rails are formed from flimsy plastics, and are not sufficiently sturdy to support the weight of a person.

Using this shower apparatus 10, it is therefore possible to create an adaptable shower system 1000, such as that indicated in Figure 2. It is possible to further provide a processor 70 in communication with at least one data input means 72 and the controller 28, the processor 70 being able to receive real-time contextual data RTCD relevant to a shower experience from the or each data input means 72. The processor 70 may then send a signal to the controller 28 to control an output of the shower apparatus 10.

The processor 70 could be located within the control unit 12 in direct wired communication with the controller 28, but more preferably, and as indicated in Figure 2, will be an external processing unit belonging to a device capable of computation, such as a smartphone 74, as shown in Figure 2, a tablet computer, or personal computer. The smartphone 74 can then wirelessly receive data from any number of data input means 72.

The or each data input means 72 could be taken from any number of sources. There could for example be a flow rate or temperature sensor inbuilt to the control unit 12, and the relevant information could be displayed to the user. However, there are numerous types of data input means 72 which may be of particular relevance to those who are less able-bodied.

For example, a data input means 72 could be provided which monitors biometric readings taken from the user, utilising one or more biometric sensors. This could, by way of example only, be a weighing device integrated into a base of a shower cubicle within which the shower apparatus 10 were installed. Other possible biometric measurements which could be monitored might include heart rate, blood pressure or body temperature of the user. If the processor 70 were to determine that there were any abnormalities in any of these measurements, then it could raise an alert to a carer, for example, who could monitor the status of the user, and come to their aid if necessary.

A data storage means 76 could further be provided in association with the processor 70, which is capable of recording historical data HD associated with the shower experience. This historical data HD could then be utilised to establish a benchmark for the above abnormalities in any of the readings taken from the or each biometric sensor. Such data may be especially useful for a carer or occupational therapist, who may not necessarily be intimately familiar with what readings may be normal for a given user.

This historical data HD could include, but is not necessarily limited to: time and duration of showering; electrical power consumption; water consumption; total duration active for the apparatus 10; total period in a 'standby' mode, wherein the shower apparatus is operational but not activated; and any number of bespoke user settings. Such settings could be input either by the user, or a carer or occupational therapist who may be in control of the shower apparatus 10. Additionally, where consumption rates are monitored, the processor 70 could output associated costs associated with said consumptions.

Such an adaptive shower system 1000 is highly advantageous for a user, since they will be able to utilise real-time data RTCD to alter their given showering experience, either manually or automatically. By way of example, if a particular biometric sensor could determine a body temperature of the user, then the processor 70 could send a signal to the controller 28 to adjust the temperature of the shower water accordingly. This ensures that the shower experience is as comfortable and stress-free as possible for the user.

This adaptive shower system 1000 is capable of a great deal of 'smart' functionality. For example, in the event of a fault or abnormal operation of the shower apparatus 10, this processor 70 can log the time and cause of the fault, to aid a mechanic to readily repair the device.

Furthermore, whilst it may be most appropriate for the user to utilise the tactile remote control unit 42, other control means for issuing commands to the control unit 12 could be envisaged. For example, there could be provided voice-activation controls, or the smartphone 74 could be used as the controller 28 as well as being the processor 70.

However, there are many adaptations which could be made to any shower apparatus in order to make it more accessible, without necessarily making the shower apparatus part of an adaptive shower system.

In the embodiment shown in Figure 1, the user-visible external surfaces of the housing 14 of the control unit 12, the body 56 of the shower head 16, and the casing 44 of the remote control unit 42 are all formed so as to include an anti-glare surface finish. This makes it substantially easier for a person having a visual impairment to distinguish between the various components of the shower apparatus 10.

The anti-glare surface finish is advantageous when compared to the glossy plastics materials used in the construction of most non-metallic shower apparatuses, since the reflections from glossy surfaces are capable of dazzling a user and making the components of the shower apparatus difficult to target.

Any part of any of these components of the shower apparatus 10 may include the anti-glare surface finish, and the finish can be achieved either by forming the surface of the components from a non-glossy material, or by coating the or each surface with a non-glossy coating.

Furthermore, although not shown in Figure 1, the user-visible external surfaces of the components of the shower apparatus 10 may be differently coloured, so as to increase a contrast between the different components. This thereby enables a user having a visual impairment to better distinguish between the components.

The remote control unit 42, as shown in Figure 3, can be used to control the functionality of the shower apparatus 10, the user providing their commands via the or each user input 50. However, for those who have limited dexterity, it can be relatively easy to enter commands via a remote control unit 42 incorrectly, which can result in, for example, scalding if the temperature of the water is increased instead of being decreased.

It is therefore possible to configure the control circuit 46 such that it has control logic, which requires a multi-step input process to activate any particular command. The user must input the correct sequence via the user input 50 in order to initiate an output of a corresponding command signal to the shower apparatus 10.

The fact that the multi-step process is more complicated than a standard input procedure, for example by simply pressing a button to activate, means that there is a lower risk of accidental activation by the user. In particular, it can be relatively straightforward for the user to accidentally hold down an activation button of the remote control unit 42 thereby sending unintended commands to the shower apparatus 10.

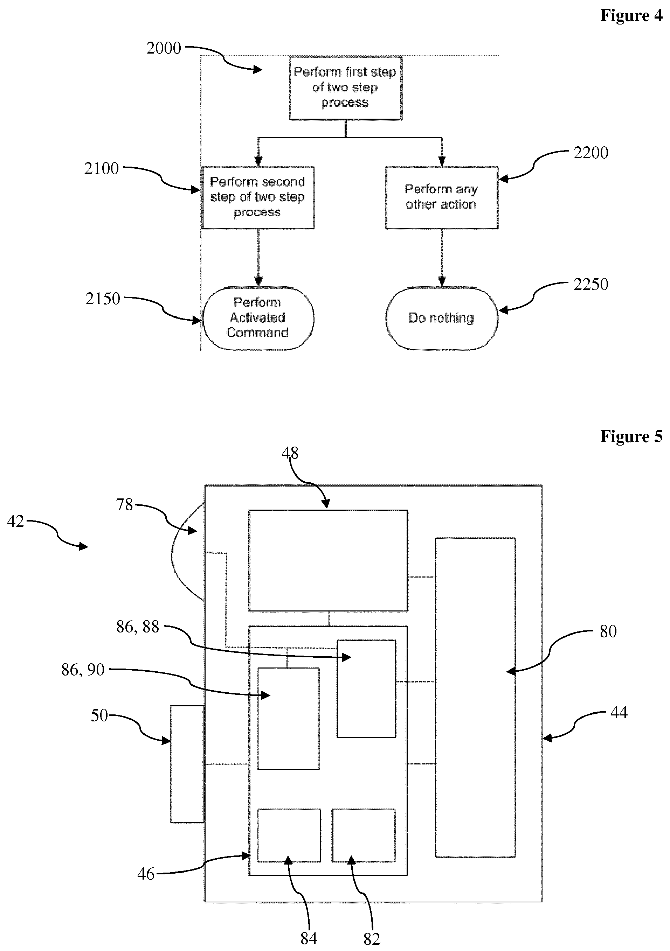

If the multi-step process were a two-step process, for example that shown in Figure 4, the user must perform the first step 2000 of the two-step process, following by the second step 2100 of the two-step process, which activates the remote control unit 42, performing the activated command 2150. However, if, subsequent to the first step 2000, any command other than the second step 2100 is performed 2200, then the activation will not occur 2250. This could, for instance, include continuation of the first step for a duration longer than a predetermined period.

The multi-step process is, in this instance, the process of applying a pressure to the user input 50, which will be a pressure sensitive pad or button, for a duration which must be within a certain range, followed by the step of releasing said pressure. The application of force for a predetermined duration ensures that accidental activation where a user input 50 is held down for long periods inadvertently, for example, when in a user's pocket, is considerably less likely. Similarly, the activation cannot occur where a user input 50 has been accidentally tapped.

Such a multi-step process ensures that the user has made a positive decision to activate the remote control unit 42. In practice, the multi-step process will conveniently be the pressing of a button for a period of around two seconds, followed by a positive and intentional release of the button. Longer periods of depressing the button beyond the predetermined period will cause deactivation of the activation routine. However, it will be apparent that alternative multi-step sequences can be considered, so as to create the same effect.

It is possible to indicate to the user whether or not the multi-step process has or has not been successful. This indication could be transmitted via an indicator means 78 of the remote control unit 42. This indicator means 78 would typically be a flashing LED light source, but, depending upon the needs of the user, may be any type of indicator means, such as a visual indicator, an audio indicator, a vibratory indicator, or any combination thereof. Furthermore, this indicator means 78 may be further capable of indicating a status of the remote control unit 42.

There are other possible accessibility upgrades which could be combined with the remote control unit 42, such as those indicated by the diagrammatic representation of Figure 5. Typically, the remote control unit 42 will be separate to the control unit 12, and therefore will have to rely on its own power source. The remote control unit 42 will therefore also include an energy storage device 80, such as a battery or battery pack, from which the control circuit 46 can draw power, in addition to a communication means 48 which allows communication of the commands of the remote control unit 42 to the shower apparatus 10. This will typically be a wireless communications means.

The control circuit 46 may then include a timing circuit 82, an energy-conservation circuit 84 and a status determination circuit 86, each of which may serve a function in determining the activation status of the said remote control unit 42. Furthermore, the indicator means 78 in this instance may be capable of indicating a charge status of the energy storage device 80, in addition to being capable of any or all of the indications described above. Again, the indicator means 78 would typically be a flashing LED light source, but, depending upon the needs of the user, may be any type of indicator means, such as a visual indicator, an audio indicator, a vibratory indicator, or any combination thereof.

To avoid wasting energy of the remote control unit 42, the energy conservation circuit 84 periodically deactivates the remote control unit 42 when not in use, thereby reducing or removing the power requirements from the energy storage device 80. The timing circuit 82 will use-independently, periodically reactivate the remote control unit 42, essentially waking it temporarily from hibernation.

Once the remote control unit 42 is reactivated, a battery-charge determination circuit 88 of the status determination circuit 86 is able to probe the charge status of the energy storage device 80, and the determined charge status may be output by the indicator means 78, thereby indicating an energisation level of the energy storage device 80 to the user prior to use of the remote control unit 42 in conjunction with the shower apparatus 10. In this manner, the user can ensure that the energy storage device 80 of the remote control unit 42 is not depleted prior to use.

It is not uncommon for such devices to be accidentally left in an operational state, with the battery thereby depleting whilst the user is unaware. When the user, typically being the carer of a vulnerable person, comes to use the remote control unit, they will often find that they are unable to operate it. This can be a greater problem for those with disabilities, as travel to the shower apparatus may in itself be challenging or tiresome, and will result in a wasted journey in the event of a depleted remote control unit.

With the present invention, the user is able to determine the charge status independently of using the remote control unit 42, and can charge the energy storage device 80 as necessary. This is especially useful if the indicator means 78 is configured so as to only activate if the charge status of the energy storage device 80 is determined to have fallen below a predetermined threshold, such as a quarter of the total charge. This allows the user to pre-empt the depletion of the energy storage device 80, which, in combination with the energy-conservation circuit 84, limits the likelihood of the user finding a depleted and unusable remote control unit 42.

It will be apparent that the charge status of the energy storage device 80 is not the only status of the remote control unit 42 which may affect the usability of the shower apparatus 10. For example, if the remote control unit 42 is in wireless communication with the control unit 12 in order to transmit commands, it is possible that the connectivity between the remote control unit 42 and control unit 12 may not be functional at all times.

In this instance, the status determination circuit 86 may include a connectivity determination circuit 90 to determine a connection status between the remote control unit 42 and the shower apparatus 10. The determined activation status may then include a determined activation status includes a charge signal which indicates whether the communication means 48 is unable to communicate with the shower apparatus 10.

The advantage of such an arrangement is largely similar to that associated with the battery-determination circuit 88 arrangement, in that the indicator means 78 can alert the user, be it visually, aurally, vibrationally or otherwise, to the existence of an error which needs rectification. For a person who is less able-bodied, the result may be that a carer is alerted to the problem before the user needs to use the shower apparatus 10, and the carer can attend to the issue in good time.

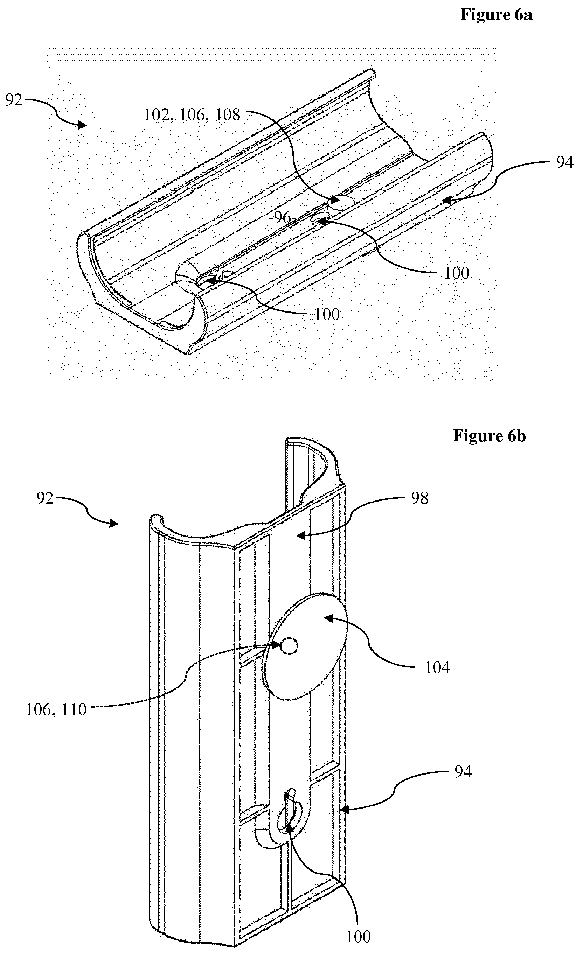

For the less able-bodied, a remote control unit 42 may be readily lost during the showering experience, since the waterproof casing 44 may well be slippery, especially if soap or similar saponic substance is being used. In such a case, it may be advisable to provide a remote control cradle 92 in which the remote control unit 42 may be stored during the shower experience. Such a cradle is shown in Figures 6a and 6b.

Such a cradle 92 comprises a main body 94 formed from a hard plastics material so as to define a remote control unit receptacle 96 which is complementarily shaped such that the remote control unit 42 can engage therein with a tight-fit. In this instance, the remote control unit 42 is slidably engagable with the remote control unit receptacle 96. Any appropriately shaped remote control unit receptacle could be envisaged, however.

At a rear surface 98 of the main body 94 of the cradle 92 is provided at least one mounting slot 100, capable of engaging with and hanging from a mounting fastener affixed to an upright surface, such as a bathroom wall or shower cubicle panel. In this way, the cradle 92 can be affixed to said upright surface in a convenient manner, so as to allow the user to readily engage and disengage the remote control unit 42 with the cradle 92.

The cradle 92 can be made so as to be particularly versatile by providing both a permanent mounting fastener 102 and a temporary mounting fastener 104 associated with the or each mounting slot 100, each mounting fastener 102, 104 being separately engageable with the mounting slot 100 via a mounting fastener engagement portion 106 attached to the mounting fastener 102, 104.

The permanent mounting fastener 102 is designed to be rigidly fixed to the upright surface, such that a user cannot remove the permanent mounting fastener 102 in use. Typically, this will be a screw-threaded fastener, having a head portion 108 acting as the mounting fastener engagement portion 106, slidably engagable with the mounting slot 100. The cradle 92 is readily releasable from the screw-threaded fastener by slidably disengaging the head portion 108 from the mounting slot 100.

The temporary mounting fastener 104 will typically be a suction cup which has an engagement portion 110 similar in shape to the head portion 108 of the screw-threaded fastener. In this way, once the cradle 92 has been removed from the permanent mounting fastener 102, the or each suction cup can be attached. In this manner, the user may then affix the cradle 92 to the upright surface in any manner of their choosing, even reaffixing the cradle 92 during a shower experience.

As such, it is possible to provide a cradle 92 for a remote control unit 42 of a shower apparatus 10 such that the cradle 92 can be either permanently affixed to a surface, or releasably affixed to a surface, thereby ensuring that a user can adjust the position of the cradle 92 to suit their particular needs. This may be particularly significant in a communal shower area, where multiple users having different requirements may user the same shower apparatus 10.

It will be appreciated that the remote control unit receptacle 96 of the cradle 92 may well be formed from a water-resistant plastics material, as with many of the components herebefore described, and therefore may also include an anti-glare surface finish to thereby substantially reduce or prevent glare from reflected light from an external surface of the cradle 92.

Those with limited mobility may also struggle to use a shower head as found on a traditional shower. Typically, the flow control mechanism of a shower head is an annular element on the water-discharge head, which is capable of selectably altering which apertures of the water-discharge head are open at any one time, thereby selectively altering the flow of water from the water-discharge head.

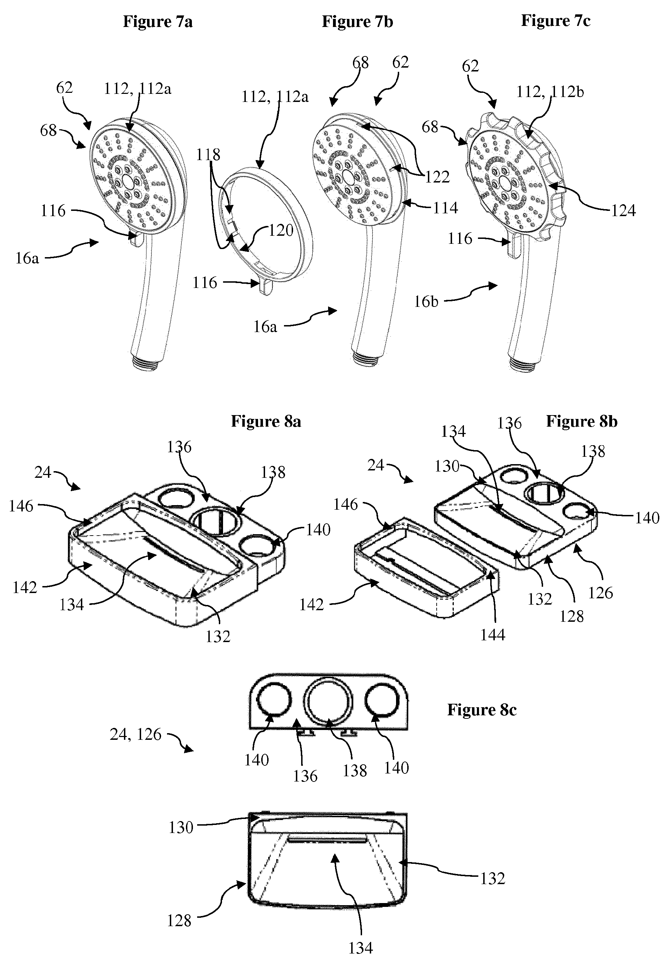

The shower head 16 of the present invention has a flow control mechanism 68 which includes a, preferably annular or substantially annular, user interface 112 which can be selectably mounted and dismounted to a complementary mounting groove 114 positioned about a perimeter of the water-discharge head 62, so as to be replaceable by a different user interface 112. Examples of such user interfaces 112a, 112b are shown in Figures 7a to 7c, in shower head embodiments 16a, 16b.

Each user interface 112a, 112b includes at least a radially or substantially radially projecting lever or knob 116 which allows the user to readily engage with and rotate the user interface 112a, 112b. Furthermore, there is a plurality of quick-release engagement elements 118 positioned on an inner surface 120 of each user interface 112a, 112b, which are engagable with complementary engagement elements 122 provided on the mounting groove 114 of the water-discharge head 62.

The quick-release engagement elements 118, 122 enable the user interface 112 of the shower head 16 to be readily attached and removed, thereby offering sufficient grip to engage the flow control mechanism 68, but ensuring that the user interface 112 can be readily released by even a person having limited dexterity. The quick-release engagement elements 118, 122 are most readily formed as a snap-fit joint between the user interface 112 and the mounting groove 114.

As shown in Figure 7c, the user interface 112b can be provided having a contoured, ridged or otherwise ergonomic gripping portion 124 around its outer perimeter so as to facilitate gripping of the user interface 112b in slippery or soapy conditions.

The two annular user interfaces 112a, 112b shown in Figures 7a to 7c are merely exemplary embodiments of a plurality of possible user interfaces 112, and different designs will be apparent to the skilled user.

The soap tray 24 may also be improved so as to be more suitable for those having a disability, in particular for those having a visual impairment. Soap is readily lost against the white background of the bathroom, and therefore users having a visual impairment will often rely on touch alone to locate soap, which can lead to loss of soap underfoot, which is rather dangerous.

The present soap tray 24, as illustrated in Figures 8a, 8b and 8c, is formed having a substantially planar main body 126, typically made from a rigid moulded plastics material. The main body 126 includes a soap-receiving portion 128 which has an upper surface 130 into which is formed a recess 132 wherein a bar of soap made readily be placed. The recess 132 may have a sloped base 134 to facilitate removal of soap, as shown in the depicted embodiment of Figures 8a to 8c, or may alternatively have a flat base to better retain the soap.

The main body 126 further includes a connector 136 for connection to the riser rail 22 of the shower apparatus 10 via an appropriately sized aperture 138. The connector 136 may be integrally formed with the soap-receiving portion 128 or may be releasably attachable, as shown in Figure 8c. In user, the connector 136 is attached to the riser rail 22, and the soap-receiving portion 128 points towards the user. There is also further provided at least one, and preferably two further apertures 140 capable of receiving additional shower implements, such as washing implements having a hook attachments.

The soap tray 24 further comprises a cover element 142 which is shaped so as to at least in part overlap and engage with the main body 126, over the soap receiving portion 128. This can be seen in the differences between Figures 8a and 8b. In the present embodiment, the cover element 142 is slidably receivable onto the main body 126 from a forward direction, but could equally be clipped on from above, below, or over one of the sides of the main body 126.

The cover element 142 is therefore substantially similarly sized to the main body 126 of the soap tray 24. However, an upper surface 144 of the cover element 142 is formed so as to be open, permitting access to the soap-receiving portion 128 and recess 132 of the main body 126. An upright wall 146 is provided around at least a portion of the perimeter of the upper surface 144 of the cover element 142, which, when the cover element 142 is mounted, defines a supplementary perimeter wall around the recess 132 of the soap-receiving portion 128 to more positively receive and house a bar of soap placed therein. An outermost edge of the cover element 142 is also chamfered so as to avoid any sharp edges which may be encountered by the user, if they are attempted to locate the soap tray 24 by touch.

Because soap is readily ejected from a standard soap tray, the supplementary perimeter wall acts as an extra barrier to ejection, which may be significant if the location of the soap is primarily being determined by touch.

A further benefit of the cover element 142 is that it is releasably attachable to the main body 126 of the soap tray 24. It is therefore possible to provide a plurality of cover elements 142 which are interchangeable depending upon the circumstances. In particular, where the user has a visual impairment, there may be certain combinations of contrasting colours available which may be easily distinguishable.

If the cover element 142 is coloured in one of these readily contrasted colours, with the main body 126 being coloured in the opposing colour, then this may advantageously make the soap tray 24 more visible to the user. This may further reduce the risk of the user accidentally losing the location of the soap tray 24 and therefore soap contained therein.

It has been discovered during the development of the present shower apparatus that there is an issue with the mounting of the water outlet 20 to the housing 14 of the control unit 12 of the shower apparatus 10. If mounted from below, then, in the event of a blockage or other obstruction water will be ejected directly from the water outlet 20, to thereby relieve the pressure in the system. This will typically be very hot water, and will therefore be ejected onto a user stood adjacent the control unit 12.

The present invention circumvents this issue by providing a relief vent 147 associated and in fluid communication with the water outlet 20, exiting at or adjacent the rear casing 148 of the housing 14. The pressure relief valve 34 is then located within the relief vent 147 to prevent ejection of water via the relief vent 147 except in circumstances wherein the pressure within the water outlet 20 is sufficient so as to force the pressure relief valve 34 open. In the depicted embodiment, this will cause the ball of the pressure relief valve 34 to physically dislocate, thereby opening the fluid route from the water outlet 30 through the relief vent 147 and out of the housing 14.

The bulk of the housing 14 below the relief vent 147 thereby prevents water from being ejected directly onto the user. However, there is a further issue with relocation of the water outlet 20, in that the water no longer has a natural path to fall under gravity, and therefore there is a much greater risk of water ingress into the housing 14. This can result in damage to the electronic components of the shower apparatus 10. As such, the water outlet 20 is also located in a lower portion of the rear casing 148, such that discharged water is less likely to drip over the housing 14, and therefore is less likely to enter the housing 14 via any imperfections therein.

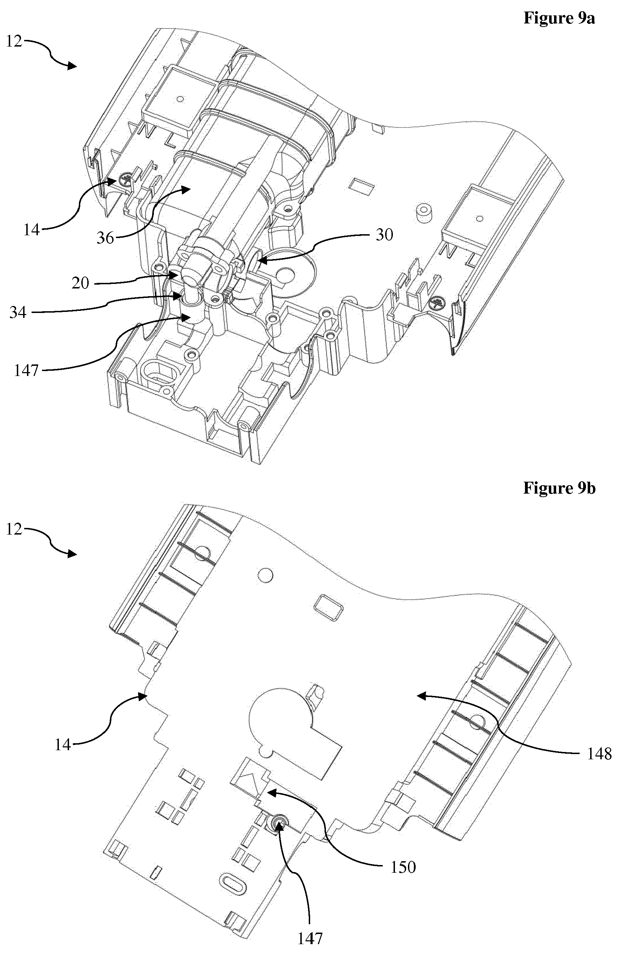

To solve the problem of pressurised water being ejected onto a user, there is provided a relief chamber 150 formed as an indentation or depression in the rear casing 148. The relief chamber 150 has no rear wall, and is therefore open to the general surrounds, which therefore enables a natural escape route for water ejected from the pressure relief valve 34 via the relief vent 147, which can harmlessly trickle down the surface to which the control unit 12 is mounted. The controller 28 is also spaced-apart from the water outlet 20, water inlet 30 and relief vent 147 within the housing 14, so as to minimise the risk of water damage in the event that there is any water ingress. The modified housing is shown in Figures 9a and 9b. Figure 9a shows the internal features of the housing, with Figure 9b showing the relief chamber 150.

Whilst the primary function of the present invention is to make shower apparatuses more accessible to users who are less able-bodied, it is recognised that many such users may be under constant or regular supervision, and there may therefore be a requirement for a carer to regulate the user's usage of the shower apparatus.

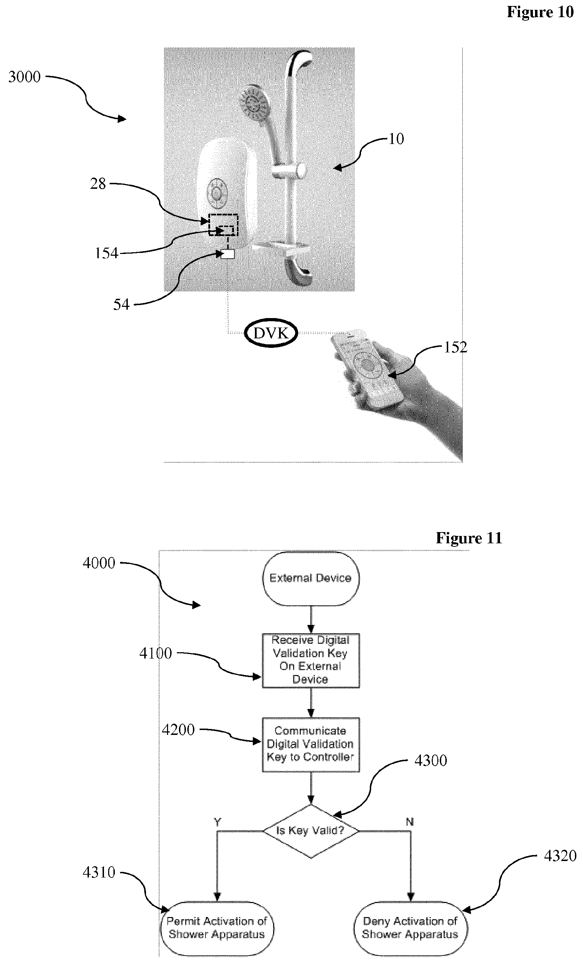

It is therefore possible to use an external device 152 which is remote to the controller 28 of the control unit 12 which is capable of validating usage of the shower apparatus 10. Such a shower-use restriction system 3000 is shown in Figure 10. The controller 28 may therefore include a validation circuit 154 which will prevent activation of the shower apparatus 10 unless appropriate authentication is presented. The external device 152 may therefore be provided with a digital validation key DVK which can be communicated to the validation circuit 154 in order to activate the shower apparatus 10.

The external device 152 will typically be a smartphone or similar smart device which is capable of wireless transmission of signals. The digital validation key DVK may be transmitted from the external device 152 and received by the wireless receiver 54 of the control unit 12.

The digital validation key DVK could be a single-use validation key, which may be useful in the situation where there are a plurality of shower apparatuses 10 which are individually and separately controllable, such as in a shower block, with a user wishing to activate and use one shower apparatus 10 once. Alternatively, the digital validation key could be used a number of times before expiring, or could be a permanently valid key, which may be more appropriate for a carer wishing to regulate the use of a patient's shower. Furthermore, the digital validation key DVK may only be valid for a predetermined period before expiring.

A method of authenticating the use of a shower apparatus is therefore possible, as indicated in Figure 11 globally at 4000. Practically, the digital validation key DVK may be supplied 4100 by a third party, and then transferred to the external device 152. The external device 152 may then communicate 4200 the digital validation key DVK to the validation circuit 154 of the controller 28, which may in turn determine a validity 4300 of the digital validation key DVK. If the digital validation key DVK is determined to be authentic and valid 4310, the controller 28 will permit activation of the shower apparatus 10, else the shower apparatus 10 will remain deactivated 4320.

Whilst this may be particularly useful to a carer to prevent unaided use of a shower apparatus by a user who requires assistance, there are numerous applications for this invention. It will be appreciated that communal shower areas having distinct shower apparatuses may be advantageous separately activatable following activation by separate individuals, and this can be achieved without having to provide separate entry restrictions to the shower block. This technology may therefore find application in various fields ranging from shower areas in sports complexes or with more temporary shower facilities such as those at festivals or large-scale events.

It will be appreciated that there are a large number of different possible improvements to shower systems detailed herein, and it is therefore possible to utilise any independently of the other, or combine any or all of the improvements to create a shower apparatus which is more suitable for a person having a disability.

It is therefore possible to provide an improved shower system suitable for use by a person having a visual impairment, with a variety of accompanying accessory upgrades for the shower apparatus which generally facilitate use of the apparatus for a less-abled bodied person.

Remote control and monitoring of this so-called 'smart' shower apparatus is therefore possible, and the features of the invention are however generally applicable to other uses of shower systems.

The words 'comprises/comprising' and the words 'having/including' when used herein with reference to the present invention are used to specify the presence of stated features, integers, steps or components, but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of examples only, and various other modifications will be apparent to persons skilled in the field without departing from the scope of the invention herein described and defined.

## Claims

1. A shower system (1000) comprising:
a shower apparatus (10);
a processor (70);
a controller (28); and
at least one data input means (72) for receiving real-time contextual data relevant to a shower experience;
wherein the contextual data is provided to the in use processor (72) which sends a signal to the controller (28) to control a real-time output of the shower apparatus (10).

2. A shower system (1000) as claimed in claim 1, wherein at least one data input means (72) is a biometric sensor.

3. A shower system (1000) as claimed in claim 1 or claim 2, further comprising data storage means (76) for recording historical data associated with the usage of the shower apparatus (10).

4. A shower system (1000) as claimed in claim 3, wherein the historical data further comprises user preference data.

5. A shower system (1000) as claimed in claim 3 or claim 4, wherein the historical data includes data associated with a fault or abnormal operation of the shower apparatus (10).

6. A shower system (1000) as claimed in any one of the preceding claims further comprising a display for displaying the real-time contextual data to the user.

7. A shower system (1000) as claimed in any one of the preceding claims, further comprising an external device within which the processor (70) is contained, and a communications means (52) associated with the controller (28) for at least receiving the signal from the processor (70).

8. A shower system (1000) as claimed in claim 7, wherein the external device is a smartphone device (74).

9. A shower system (1000) as claimed in claim 7 or claim 8, wherein the communications means (52) is a wireless receiver.

10. A shower system (1000) as claimed in claim 9, wherein the communications means (52) is a wireless transceiver.

11. A shower system (1000) as claimed in any one of the preceding claims, wherein the processor (70) is configured to output a status of the shower apparatus (10) to an external device.

12. A shower system (1000) as claimed in any one of the preceding claims, wherein the controller (28) is a remote control unit (42).

13. A shower system (1000) as claimed in any one of the preceding claims, wherein the controller (28) is voice-activated.

14. A shower system (1000) as claimed in any one of the preceding claims, further comprising indicator means (78) for indicating a status of the shower system (1000).

15. A shower system (1000) substantially as hereinbefore described with reference to Figures 1 and 2 of the accompanying drawings.

16. A shower apparatus (10) adapted for use by a user having a visual impairment, the shower apparatus (10) comprising:
a housing (14) including at least a water inlet (30), a water outlet (20), and a control unit (12) having at least a flow control mechanism (68) for controlling at least water flow from the water inlet (30) to the water outlet (20);
a shower head (16); and
a liquid conduit (18) connecting the shower head (16) to the water outlet (20);
wherein at least a portion of a user-facing external surface of the shower apparatus (10) includes an anti-glare surface finish to thereby substantially reduce or prevent glare from reflected light from the said external surface.

17. A shower apparatus (10) as claimed in claim 16, further comprising a remote control unit (42), at least a portion of an external surface of the remote control unit (42) including an anti-glare surface finish.

18. A shower apparatus (10) as claimed in claim 16 or claim 17, wherein the at least one portion of the user-facing external surface of the shower apparatus (10) is formed from a material having an anti-glare surface.

19. A shower apparatus (10) as claimed in claim 16 or claim 17, wherein the at least one portion of the user-facing external surface of the shower apparatus (10) is coated with an anti-glare coating.

20. A shower apparatus (10) as claimed in any one of claims 16 to 19, wherein a plurality of user-facing external surfaces of the shower apparatus (10) includes an anti-glare surface finish, each user-facing external surface being differently coloured so as to increase a contrast between the respective user-facing external surfaces.

21. A shower apparatus (10) substantially as hereinbefore described with reference to Figures 1 and 3 of the accompanying drawings.

22. A shower-apparatus remote control unit (42) comprising:
a water-resistant casing (44);
a control circuit (46);
at least one user input (50) to allow the user to input commands to the control circuit (46) to control a function of an associated remote-controllable shower apparatus; and
communications means (52) for transmitting commands provided by the user to the shower apparatus;
the control circuit (46) including control logic requiring a multi-step input process via the user input in order to initiate an output of a corresponding command signal to the shower apparatus.

23. A remote control unit (42) as claimed in claim 22, wherein the user interface (50) includes a pressure sensitive input means for receiving the multi-step input process.

24. A remote control unit (42) as claimed in claim 22 or claim 23, wherein the control circuit (46) includes a timer (82) operable in conjunction with the control logic to enable the multi-step input process.

25. A remote control unit (42) as claimed in any one of claims 22 to 24, wherein the remote control unit (42) is in wired communication with the shower apparatus.

26. A remote control unit (42) as claimed in any one of claims 22 to 24, wherein the communications means (52) includes a wireless transmitter, the remote control unit (42) being in wireless communication with the shower apparatus.

27. A remote control unit (42) as claimed in any one of claims 22 to 26, further comprising indicator means (78) for indicating the successful input of a multi-step input process.

28. A remote control unit (42) as claimed in claim 27, wherein the indicator means (78) is further capable of indicating a status of the remote control unit (42).

29. A remote control unit (42) as claimed in claim 27 or claim 28, wherein the indicator means (78) includes at least one of the following: visual indicator; audio indicator; and vibratory indicator.

30. A remote control unit (42) substantially as hereinbefore described with reference to Figure 3 of the accompanying drawings.

31. A method of controlling a shower apparatus, the method comprising a multi-step input process by a user to an electronic controller interface of the shower apparatus in order to enable a control command to be outputted by an electronic control circuit of the shower apparatus.

32. A method as claimed in claim 31, wherein the multi-step input process includes a first step of application of pressure for a period which is within a predetermined range to the electronic controller interface, followed by the step of release of said pressure.

33. A shower-apparatus remote control unit (42) comprising:
a water-resistant casing (44);
an electronic control circuit (46) including at least a timing circuit (82), an energy-conservation circuit (84), and a status determination circuit (86);
at least one user input (50) to allow the user to input commands to control a function of the shower apparatus;
communications means (52) for communicating with the shower apparatus;
an energy storage device (80) housed within the casing (44); and
indicator means (78) for indicating an activation status of the remote control unit;
wherein the energy conservation circuit (84) periodically deactivates the remote control unit (42) when not in use, and the timing circuit (82) use-independently periodically reactivates the remote control unit (42) enabling the status determination circuit (86) to determine an activation status of the remote control unit (42), the activation status being outputtable by the indicator means (78), so that a user can pre-determine an activity level of the remote control unit (42) before utilising an associated shower apparatus.

34. A remote control unit (42) as claimed in claim 33, wherein the status determination circuit (86) includes a battery-charge determination circuit (88) to determine a charge status of the energy storage device (80), the determined charge status being outputtable by the indicator means (78), so that a user can pre-determine an energisation level of the energy storage device (80) before utilising an associated shower apparatus.

35. A remote control unit (42) as claimed in claim 34, wherein the determined charge status includes a charge signal which indicates whether the charge status of the energy storage device (80) has fallen below a predetermined threshold.

36. A remote control unit (42) as claimed in any one of claims 33 to 35, wherein the status determination circuit (86) includes a connectivity determination circuit (90) to determine a connection status between the remote control unit (42) and the shower apparatus, the determined activation status including a charge signal which indicates whether the communication means (52) is unable to communicate with the shower apparatus.

37. A remote control unit (42) as claimed in any one of claims 33 to 36, wherein the indicator means (78) includes at least one of the following: visual indicator; audio indicator; and vibratory indicator.

38. A remote control unit (42) as claimed in any one of the claims 33 to 37, wherein the indicator means (78) is further capable of indicating the successful input of a command to the remote control unit (42).

39. A remote control unit (42) as claimed in any one of claims 33 to 38, wherein the remote control unit (42) is in wired communication with the shower apparatus.

40. A remote control unit (42) as claimed in any one of claims 33 to 38, wherein the communications means (52) includes a wireless transmitter, the remote control unit (42) being in wireless communication with the shower apparatus.

41. A remote control unit (42) substantially as hereinbefore described, with reference to Figure 5 of the accompanying drawings.

42. A remote-control cradle (92) for a shower-apparatus remote control unit, the cradle (92) comprising:
a remote control unit receptacle (96); and
mounting means for mounting the cradle (92) to a surface, the mounting means including a permanent mounting fastener (102), a temporary mounting fastener (104), and a mounting fastener engagement portion (100) on the receptacle (96) which is selectably engagable with the permanent mounting fastener (102) and the temporary mounting fastener (104).

43. A remote-control cradle (92) as claimed in claim 42, wherein the temporary mounting fastener (104) is a suction cup.

44. A remote-control cradle (92) as claimed in claim 42 or claim 43, wherein the permanent mounting fastener (102) is a screw-threaded fastener.

45. A remote-control cradle (92) as claimed in any one of claims 42 to 44, wherein the wherein the mounting fastener engagement portion (110) on the receptacle (96) is slidably engagable with the permanent mounting fastener (102) and temporary mounting fastener (104).

46. A remote-control unit cradle (92) as claimed in any one of claims 42 to 45, wherein the remote control unit receptacle (96) is capable of slidably receiving the shower-apparatus remote control unit.

47. A remote-control cradle (92) as claimed in any one of claims 42 to 46, wherein the remote control unit receptacle (96) is formed from a water-resistant plastics material.

48. A remote-control cradle (92) as claimed in any one of claims 42 to 47, wherein a user-facing external surface of the remote control unit receptacle (96) includes an anti-glare surface finish to thereby substantially reduce or prevent glare from reflected light from the said external surface.

49. A remote-control cradle (92) substantially as hereinbefore described, with reference to Figures 6a and 6b of the accompanying drawings.

50. A shower head device (16) for a shower apparatus, the shower head (16) comprising:
a hollow body (56) defining a water inlet (58) and a water outlet (60), shower water being flowable therebetween;
a water-discharge head (62) in liquid communication with the water outlet (60) of the hollow body (56) and including a plurality of apertures (64) in a surface thereof to enable the discharge of water; and
a rotationally actuatable flow control mechanism (68) capable of selectably altering a flow rate through the plurality of apertures (64);
the flow control mechanism (68) including a plurality of ergonomically different interchangeable user interfaces (112; 112a; 112b) which can be selectably mounted and demounted based on a user requirement.

51. A shower head device (16) as claimed in claim 50, wherein the user interface(112; 112a; 112b) includes a quick-release engagement means (118, 122) for attachment to the water-discharge head (62).

52. A shower head (16) as claimed in claim 51, wherein the quick-release engagement means (118, 122) is a snap-fit joint between the flow control mechanism (68) and the water-discharge head (62).

53. A shower head device (16) as claimed in claim 52, wherein the snap-fit joint is formed by a plurality of engagement elements (118) on the user interface (112; 112a; 112b) of the flow-control mechanism (68) which interengage with a plurality of complementary engagement elements (122) on the water-discharge head (62).

54. A shower head device (16) as claimed in any one of claims 50 to 53, wherein the flow control mechanism (68) has a contoured or ridged radial extent to facilitate gripping.

55. A shower head device (16) as claimed in any one of claims 50 to 54, wherein the flow control mechanism (68) includes a radially or substantially radially projecting lever or knob (116) to facilitate rotation of the flow control mechanism (68).

56. A shower head device (16) as claimed in any one of claims 50 to 55, wherein each user interface (112; 112a; 112b) is annular or substantially annular.

57. A shower head device (16) substantially as hereinbefore described, with reference to Figures 7a, 7b or 7c of the accompanying drawings.

58. A riser-mountable soap tray (24) for use with a shower apparatus, the soap tray (24) comprising:
a main body (126) including a soap-receiving portion (128) which has an upper surface (130) having a recess (132) formed therein for receiving a bar of soap, and a connector (136) for connecting the tray (24) to a riser rail of the shower apparatus; and
a cover element (142) shaped so as to at least in part overlap and engage with the main body (126), the mounted cover element (142) defining a supplementary perimeter wall around the recess (132) of the main body (126) to more positively receive and house the bar of soap when placed therein.

59. A riser-mountable soap tray (24) as claimed in claim 58, wherein the cover element (142) is coloured so as to contrast with the colour of the main body (126), so as to be readily identifiable by a user having a visual impairment.

60. A riser-mountable soap tray (24) as claimed in claim 59, wherein the cover element (142) is selectable from a plurality of differently coloured cover elements dependent on the visual impairment of the user.

61. A riser-mountable soap tray (24) as claimed in any one of claims 58 to 60, wherein the connector (136) is releasably attachable to the soap-receiving portion.

62. A riser-mountable soap tray (24) as claimed in any one of claims 58 to 61, wherein at least part of an user-facing external surface of the main body (126) includes an anti-glare surface finish to thereby substantially reduce or prevent glare from reflected light from the said external surface.

63. A riser-mountable soap tray (24) as claimed in any one of claims 58 to 62, wherein at least part of an user-facing external surface of the cover element (142) includes an anti-glare surface finish to thereby substantially reduce or prevent glare from reflected light from the said external surface.

64. A riser-mountable soap tray (24) as claimed in any one of claims 58 to 63, wherein an outer edge of the cover element (142) is chamfered.

65. A riser-mountable soap tray (24) substantially as hereinbefore described, with reference to Figures 8a, 8b or 8c of the accompanying drawings

66. A shower-water controller for a shower apparatus, the controller comprising:
a water-resistant casing (14) including a relief chamber (150);
a water inlet (30);
a water outlet (20);
a relief vent (147) in fluid communication with the water outlet (20); and
a control unit (12) housed within the casing (14) and having at least a flow control mechanism (68) for controlling at least water flow from the water inlet (30) to the water outlet (20);
the relief vent (147) being at or adjacent to a rear surface (148) of the casing (14) and being in fluid communication with the relief chamber (150), so as to prevent or inhibit water discharge into the casing (14) and/or towards a user in the event of a failure at or adjacent to the water outlet (20).

67. A shower-water controller as claimed in claim 66, wherein the relief chamber (150) is moulded into the rear surface (148) of the casing (14).

68. A shower-water controller as claimed in claim 66 or claim 67, wherein the control unit (12) is remotely controllable by a remote control unit (42).

69. A shower-water controller as claimed in any one of claims 66 to 68, further comprising a pressure-relief valve (34) within the relief vent (147), the pressure-relief valve (34) discharging into the relief chamber (150) in the event of elevated pressure in the water inlet (30).

70. A shower-water controller as claimed in any one of claims 66 to 69, wherein the control unit (12) is spaced-apart from the water inlet (30), water outlet (20) and relief vent (147) within the casing (14).

71. A shower-water controller as claimed in any one of claims 66 to 70, wherein the relief chamber (150) is open to permit egress of water discharged therein.

72. A shower-water controller as claimed in any one of claims 66 to 71, wherein the relief vent (147) is positioned at or adjacent a lower portion of the rear casing (148).

73. A shower-water controller as claimed in any one of claims 66 to 72, wherein the relief vent (147) is integrally formed with the water outlet (20).

74. A shower-water controller substantially as hereinbefore described with reference to Figures 1, 9a and 9b of the accompanying drawings.

75. A method of preventing water ingress into a shower-water controller, the method comprising the steps of: a] locating a relief vent (147) in fluid communication with a water outlet (20) of the shower-water controller at the rear of the shower-water controller; b] providing a pressure relief valve (34) at or adjacent the relief vent (147), and a relief chamber (150) external to a housing (14) of the shower-water controller; and c] discharging excess water from the water outlet (30) via the relief chamber (150) using the pressure relief valve (34) in the event of a build-up of water pressure, such that the excess water does not flow into the housing (14) or onto a user of an associated shower apparatus.

76. A shower-use restriction system (3000) comprising:
a shower apparatus (10);
a controller (28) in communication with and capable of controlling an activation status of the shower apparatus (10); and
a remote external device (152) communicable with the controller (28), the remote external device (152) including a digital validation key (DVK) which, upon communication to the controller (28), enables activation of the shower apparatus (10) by the controller (28).

77. A shower-use restriction system (3000) as claimed in claim 76, wherein the controller (28) includes a wireless communications device (54), capable of wireless communication with the external device (152).

78. A shower-use restriction system (3000) as claimed in claim 76 or claim 77, wherein the external device (152) is a mobile computing device.

79. A shower-use restriction system (3000) as claimed in any one of claims 76 to 78, wherein a plurality of said shower apparatuses (10) is provided, each shower apparatus (10) being associated with a said controller (28), wherein each shower apparatus (10) is separately and individually activatable by the digital validation key (DVK).

80. A shower-use restriction system (3000) as claimed in any one of claims 76 to 79, wherein the digital validation key (DVK) can only be validly used once before becoming invalid.

81. A shower-use restriction system (3000) as claimed in any one of claims 76 to 79, wherein the digital validation key (DVK) can be validly used a plurality of times before becoming invalid.

82. A shower-use restriction system (3000) as claimed in any one of claims 76 to 79, wherein the digital validation key (DVK) can be validly used for a predetermined period before becoming invalid.

83. A shower-use restriction system (3000) as claimed in any one of claims 76 to 79, wherein the digital validation key (DVK) can be indefinitely validly used.

84. A shower-use restriction system (3000) as hereinbefore described, with reference to Figure 10 of the accompanying drawings.

85. A method (4000) of validating sanctioned use of a shower apparatus (10) using a system (3000) as claimed in any one of claims 76 to 84, the method (4000) comprising the steps of:
a] receiving (4100) a digital validation key (DVK) onto the remote external device (152) from a third-party source;
b] the remote external device (152) communicating (4200) the digital validation key (DVK) to the controller (28);
c] the controller (28) determining a validity (4300) of the digital validation key (DVK); and
d] if the digital validation key (DVK) is valid, the controller (28) permitting (4310) activation of the shower apparatus (10) by the user, otherwise the controller (28) denying (4320) activation of the shower apparatus (10) by the user.
